(19) **Europäisches Patentamt**

**European Patent Office**

**Office européen des brevets**

(11) **EP 1 396 301 A2**

(12) **EUROPÄISCHE PATENTANMELDUNG**

| | |
|---|---|
| (43) Veröffentlichungstag:<br>**10.03.2004 Patentblatt 2004/11** | (51) Int Cl.⁷: **B23B 31/16**, B23B 31/28 |

(21) Anmeldenummer: **03020060.4**

(22) Anmeldetag: **04.09.2003**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK**<br><br>(30) Priorität: **05.09.2002 DE 10241476** | (71) Anmelder: **MARCO SYSTEMANALYSE UND ENTWICKLUNG GmbH**<br>**D-85221 Dachau (DE)**<br><br>(72) Erfinder: **Reuter, Martin**<br>**85221 Dachau (DE)**<br><br>(74) Vertreter: **Manitz, Finsterwald & Partner**<br>**Postfach 31 02 20**<br>**80102 München (DE)** |

(54) **Vorrichtung zum Spannen von Werkstücken oder Werkzeugen**

(57) Die Erfindung betrifft eine Vorrichtung zum Spannen von Werkstücken oder Werkzeugen, vorzugsweise für die rotierende Bearbeitung.

Die Aufgabe der Erfindung, eine Vorrichtung anzugeben, die große Stellkräfte bei genügend hohen Stellwegen realisiert und gleichzeitig eine Variation von Stellweg und Stellkraft bei Verwendung des gleichen Stellantriebs ermöglicht, wird dadurch gelöst, dass die Spannvorrichtung aus mindestens zwei Antriebseinheiten mit je einer Spanneinheitbesteht, wobei jede Antriebseinheit A einen Piezostapel 1 sowie einen Kompensationskörper 4 aufweist, die Antriebseinheiten A von einem Gehäuse 3 umgeben sind, und dass jeder Piezostapel 1 über den Kompensationskörper 4 mit der Spamieinheit SE verbunden ist, so dass ein Spannkörper 8 vermittels der Antriebseinheiten A über die Spanneinheiten SE einspannbar ist.

**Fig. 1**

EP 1 396 301 A2

**Beschreibung**

Die Erfindung betrifft eine Vorrichtung zum Spannen von Werkstücken oder Werkzeugen, vorzugsweise für die rotierende Bearbeitung.

Es ist bekannt, dass Spannvorrichtungen von Hand bzw. durch elektrodynamische, pneumatische oder hydraulische Antriebe betätigt werden können. Für die rotierende Bearbeitung wirken diese Antriebe in der Regel auf rotationssymmetrisch angeordnete Spannbacken ein, die die Werkstücke oder Werkzeuge in radialer Richtung umfassen. Dabei arbeiten die Spannbacken meist synchron von einem Antrieb gesteuert.

In der Schrift DE 39 29 010 A1 werden aber auch Anordnungen beschrieben, bei denen die einzelnen Segmente durch je einen Antrieb unabhängig gesteuert werden können.

Solche Anordnungen sind nur in der Lage, kleinere Exzentrizitäten auszugleichen oder sie bewusst zu erzeugen.

Aus der Schrift DE 39 29 010 A1 ist der Einsatz von Piezostapeln als Antrieb für Spannbacken prinzipiell bekannt.

Die Piezostapel ermöglichen praktisch beliebig feine Zustellung von Weg und/oder Kraft, erzeugen sehr hohe Stellkräfte und Stellenergien bei kleinsten Bauvolumen und benötigen zum Halten einer Position keine Energie. Der Hauptnachteil der Piezostapel ist aber der geringe Stellweg von 0,1 bis 0,2 % der Stapellänge.

Die in der DE 39 29 010 A1 offenbarten Anordnungen von Piezoantrieben weisen einige Nachteile auf, die die Funktion wesentlich beeinträchtigen und unter extremen Bedingungen sogar verhindern können.

Der Stellweg von Aktoren beträgt bekanntlich 0,1 bis 0,2 % der Stapellänge. Die in der DE 39 29 010 A1 angegebene Weglänge von ca. 1 mm ist somit völlig unrealistisch und eine Nacharbeitbarkeit der Offenbarung ist nicht gegeben.

Die typischen, realisierbaren Stellwege betragen bspw. 40 µm, wobei für deren Erzeugung eine Stapellänge von 31 mm notwendig ist. Die für das Spannen des Werkstückes vorgesehenen Piezostapel sind radial angeordnet, was den Nachteil hat, dass große Stellhübe nur bei sehr großen Durchmessern des Spannwerkzeuges möglich sind.

Weiterhin ist von Nachteil, dass die Anordnungen viele Einzelteile und Übergänge im Kraftfluss aufweisen, an denen durch Flächenpressungen Formabweichungen, Tolleranzen, Lager- und Umkehrspiel auftreten, die bei den geringen Stellwegen der Piezoantriebe die Funktion wesentlich beeinträchtigen.

Schließlich treten bei der Bearbeitung durch die Bearbeitungswärme, die Kühlung bzw. durch Schwankungen der Umgebungstemperatur Temperaturunterschiede zwischen +10 °C und +80 °C und mehr auf.

Die unterschiedlichen thermischen Ausdehnungskoeffizienten zwischen dem Gehäusematerial (in der Regel Stahl) und dem Piezostapel führen zu thermischen Längenänderungen, die im Bereich von 50 % der Piezodehnung liegen.

Dies führt zu einer erheblichen Reduzierung der Spannkräfte und in extremen Fällen zum Lösen des gespannten Teiles.

Durch die Erfindung sollen die aufgezeigten Nachteile des Standes der Technik vermieden werden. Ihr liegt die Aufgabe zugrunde, eine Vorrichtung anzugeben, die große Stellkräfte bei genügend hohen Stellwegen realisiert und gleichzeitig eine Variation von Stellweg und Stellkraft bei Verwendung des gleichen Stellantriebs ermöglicht.

Gemäß der Erfindung wird diese Aufgabe durch die kennzeichnenden Merkmale des ersten Patentanspruchs gelöst. Vorteilhafte Ausgestaltungen sind in den nachgeordneten Ansprüchen angegeben.

Das Wesen der vorliegenden Erfindung besteht darin, dass die Vorrichtung piezoelektrische Antriebe mit Kompensationskörpern aufweist, die die Übertragungs-/Übersetzungsfunktion bezüglich Weg und Kraft zwischen piezoelektischem Antrieb und zu verspannendem Werkzeug bzw. Werkstück tragen und dass die Vorrichtung eine Temperaturkompensationsfimktion auf Grund der gewählten Werkstoffzusammensetzung und -dimensionierung der Kompensationskörper aufweisen kann.

Die erfindungsgemäße Vorrichtung weist eine Anordnung der Piezostapel in axialer Richtung des zu verspannenden Körpers auf. Das ermöglicht eine große Länge der Piezostapel und damit große Piezostellwege. Alternativ ist eine lineare oder kreisförmige Anordnung von mehreren Piezostapeln, was große Piezoquerschnitte und große Stellkräfte zum Verspannen von Werkzeugen bzw. Werkstücken ermöglicht.

Durch die Übertragungs-/Übersetzungsfunktion der erfindungsgemäßen Vorrichtung ist sowohl eine Umlenkung des Kraftflusses von parallel am Antrieb zu senkrecht am Spannkörper, als auch eine Beeinflussung der Kran-Weg-Kennlinie (Weg- oder Kraftübersetzung) möglich.

Der Vorteil der erfindungsgemäßen Vorrichtung besteht darin, dass sie einen kompakten Aufbau in radialer Richtung aufweist, einen zentralen freien Durchgang besitzt, große Stellkräfte bei genügend hohen Stellwegen realisiert, wobei Variation von Stellweg und Stellkraft bei Verwendung des gleichen Stellantriebs möglich sind.

Die Erfindung wird nachstehend anhand der schematischen Zeichnung von sechs Ausführungsbeispielen näher erläutert. Es zeigen:

**Fig. 1:** eine Ausführungsform einer erfindungsgemäßen Vorrichtung mit zwei Antriebseinheite in Axialschnittdarstellung,

**Fig. 2:** eine Ausführungsform von thermisch kompensierten Antriebseinheiten in Längsschnittdarstellung,

**Fig. 3a:** : eine weitere Ausführungsform thermisch kompensierter Antriebseinheiten in Schnittdarstellung sowie in Querschnittdarstellung,

**Fig. 3b:** die Ausführungsform gem Fig. 3a in Grundrissdarstellung,

**Fig. 4a:** eine zweite Ausführungsform einer erfindungsgemäßen Vorrichtung mit zwei Antriebseinheiten in Längsschnittdarstellung entlang der Rotationsachse eines Spannkörpers,

**Fig. 4b: :** eine dritte Ausführungsform einer erfindungsgemäßen Vorrichtung mit zwei Antriebseinheiten in Längsschnittdarstellung entlang der Rotationsachse eines Spannkörpers,

**Fig. 5:** eine vierte Ausführungsform einer erfindungsgemässen Vorrichtung mit zwei Antriebseinheiten in Längsschnittdarstellung entlang der Rotationsachse eines Spannkörpers,

**Fig. 6:** eine fünfte Ausführungsform einer erfindungsgemässen Vorrichtung mit zwei Antriebseinheiten in LängsschnittDarstellung entlang der Rotationsachse eines Spannkörpers,

**Fig. 7:** eine sechste Ausführungsform einer erfindungsgemässen Vorrichtung mit zwei Antriebseinheiten in LängsschnittDarstellung entlang der Rotationsachse eines Spannkörpers,

**Fig. 8:** eine siebende Ausführungsform einer erfindungsgemässen Vorrichtung mit zwei Antriebseinheiten in LängsschnittDarstellung entlang der Rotationsachse eines Spannkörpers,

**Fig. 9:** eine Federscheibe gemäss Fig. 8 in der Draufsicht und in einer Längsschnittdarstellung.

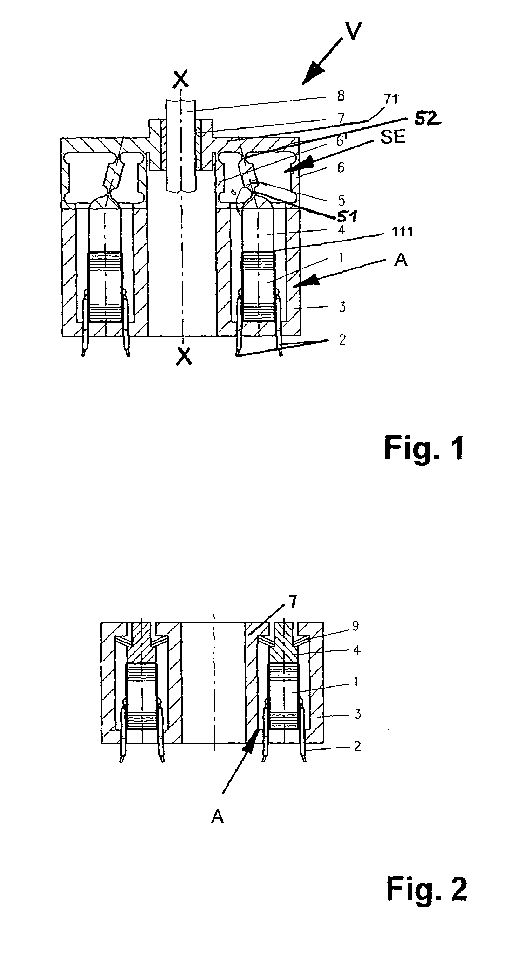

Eine erfindungsgemäße Vorrichtung V mit einer geometrischen Achse X-X besteht aus mindestens zwei Antriebseinheiten A in spiegelsymmetrischer oder radialsymetrischer Anordnung mit je einer Spanneinheit SE, wobei jede dieser Antriebseinheiten A, wie in Fig. 1 dargestellt, aus mindestens einem Piezostapel 1 mit Anschlussleitungen 2 besteht, der an seinem einen Ende 11 mit einem Kompensationskörper 4 verbunden und von einem Gehäuse 3 umgeben ist, wobei das Kompensationskörper 4 über eine Schubstange 5 mit einem Schaft 71 einer Spannbacke 7 um einen Winkel α verschwenkbar über Festkörpergelenke 51, 52 verbunden ist. Der Piezostapel 1 ist dabei in axialer Richtung des Spannkörpers 8 gelagert und stoffschlüssig mit dem Kompensationskörper 4 und der Schubstange 5 verbunden.

Die zwei mit dem Schaft 71 der Spannbacke 7 verbundenen Schenkel 6 und 6' bilden mit dem Schaft 71 ein Parallelogramm, das zusammen mit der schräg unter dem Winkel α vorgespannt gelagerten Schubstange 5, die über das Kompensationsstück 4 mit den Piezostapel 1 verbunden ist, die Übertragung der Bewegung des Piezostapels 1 auf die Spannbacke 7 ermöglicht.

Zwei dieser Antriebseinheiten A sind bspw., wie in Fig. 1 gezeigt, spieglsysmetrisch zueinander zu einer Vorrichtung in der Art angeordnet, so dass zwischen den symmetrisch angeordneten Spannbacken 7 des Gehäuses 3 ein Spannkörper 8 einspannbar ist.

Wird der Piezostapel 1 einer Antriebseinheit A oder beider Antriebseinheiten A über die Anschlussleitungen 2 elektrisch angesteuert, dehnt er sich in axialer Richtung aus. Durch die Schrägstellung der Schubstange 5 wird die Bewegung des Piezostapels 1 übersetzt und durch die Parallelogrammanordnung der Schenkel 6 und 6' zu dem dem Schaft 71 in eine radial gerichtete Bewegung umgewandelt.
Nach dem Kraftschluss der Spannbacken 7 werden die Antriebseinheiten A blockiert und proportional zur Antriebssteifigkeit Haltekraft aufgebaut.

Der Anstellwinkel α der Schubstange 5 bewirkt einen Übersetzungskoeffizienten des Stellweges:

$$Ü = tg\ α.$$

Für Anstellwinkel α > 45 ergibt sich Wegübersetzung und für α < 45 Kraftübersetzung.

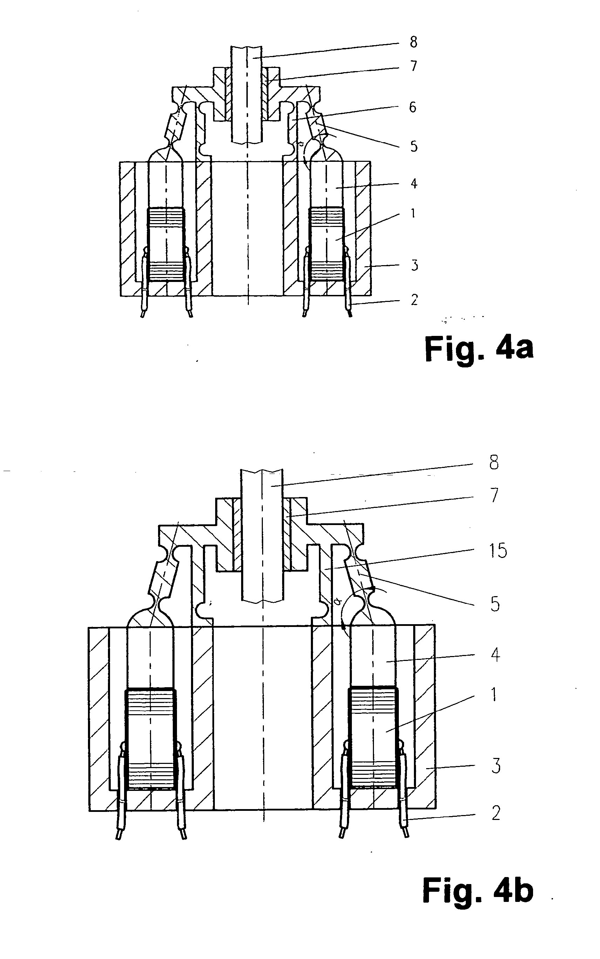

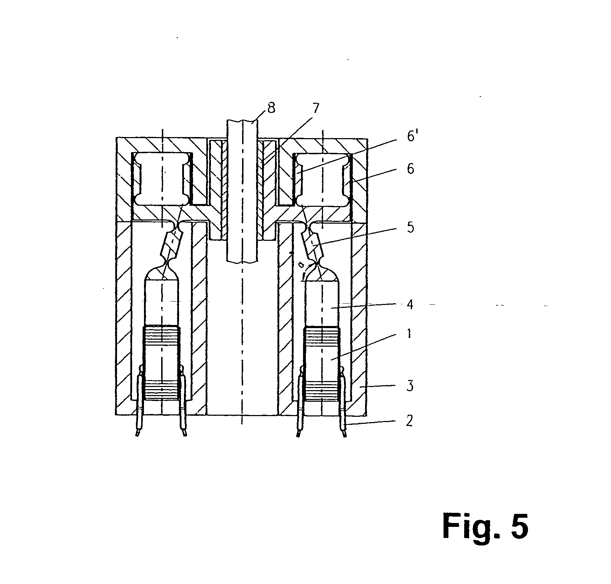

Sind die Ansprüche an die Führungsgenauigkeit nicht sehr hoch, so kann auf den Schenkel 6' auch, wie in Fig. 4a und 4b gezeigt, verzichtet werden.
Die Schenkel können auch, wie in Fig. 5 dargestellt, dem Antrieb entgegengerichtet angeordnet sein.
Mit den Anordnungen gemäss Fig. 1, 4 und 5 können Wegübersetzungen von 10-fach und mehr erreicht werden.

Die Fig. 2 zeigt den erfindungsgemässen Aufbau eines thermisch kompensierten Aufbaus einer Antriebseinheit A.

Der Piezostapel 1 ist in ein U-förmiges Gehäuse 3, bspw. aus Stahl, eingebaut und bspw. mit Tellerfedern 9 vorgespannt.
Seine thermische Dehnung hängt neben dem Werkstoff und dem konkreten Schichtaufbau in Stapel auch von den Betriebsbedingungen, dem Vorspanndruck, der elektrischen Ansteuerung ab. Bei den verwendeten Stapelanordnungen ist sie kleiner als die des Stahlgehäuses. Der Ausdehnungskoeffizient dieses Stahlgehäuses liegt bei 7,5 · 10$^{-6}$/K.

Erfindungsgemäss wird ein Kompensationskörper 4 aus einem Material mit großer thermischer Ausdehnung, bspw. Aluminium (Ausdehnungskoeffizient bei 23 · 10$^{-6}$/K), in seiner Länge so gewählt, dass die Summe der thermischen Dehnung des Piezostapels 1 und des Kompensationskörpers 4 gerade gleich der Dehnung des Gehäuses 3 ist und somit keine thermisch induzierte Bewegung an der Spannbacke 7 auftritt.

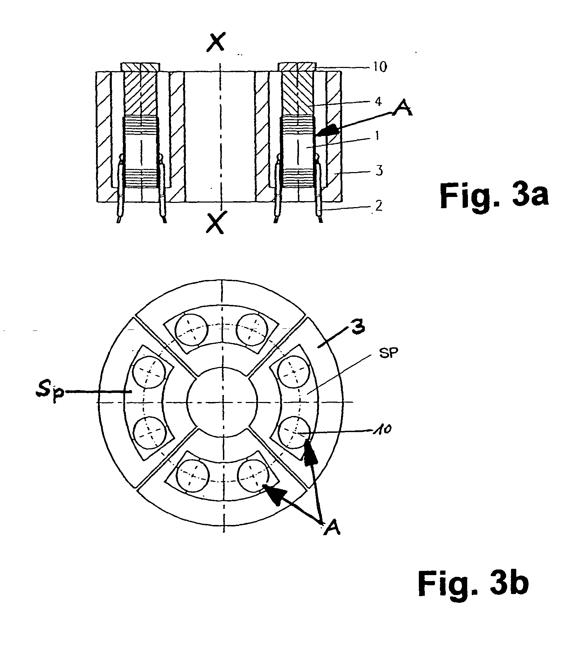

In den Fig. 3a und b ist dargestellt, wie eine Vielzahl von Antriebseinheiten A in einem rohrförmigen Gehäuse 3 mit U-förmigem Querschnitt zu einer Vorrichtung angeordnet und rotationssymmetrisch zu einer Achse X-X in einzelne Spannsegmente SP geteilt sind. Jedes Spannsegment SP wird durch eine Abtriebsplatte 10, die gleichzeitig Spannbacke ist, gebildet, auf die je ein oder mehrere identische Antriebseinheiten A parallel arbeiten, kann aber auch durch ein gemeinsames Kompensationskörper 4 gebildet sein. Jedes Spannsegment SP kann gegebenenfalls unabhängig von den anderen gesteuert werden und kleine Exzentrizitäten ausgleichen oder ggf. definiert erzeugen. Auch ein einziges Ringsegment ist möglich, wenn alle Spannbacken 7 ausschließlich zentralsymmetrisch und synchron arbeiten sollen.

Zwei in den fig. 3a und b dargestellte Vorrichtungen arbeiten zum Einspannen eines Spannkörpers in axialer Richtung gegenläufig zusammen.

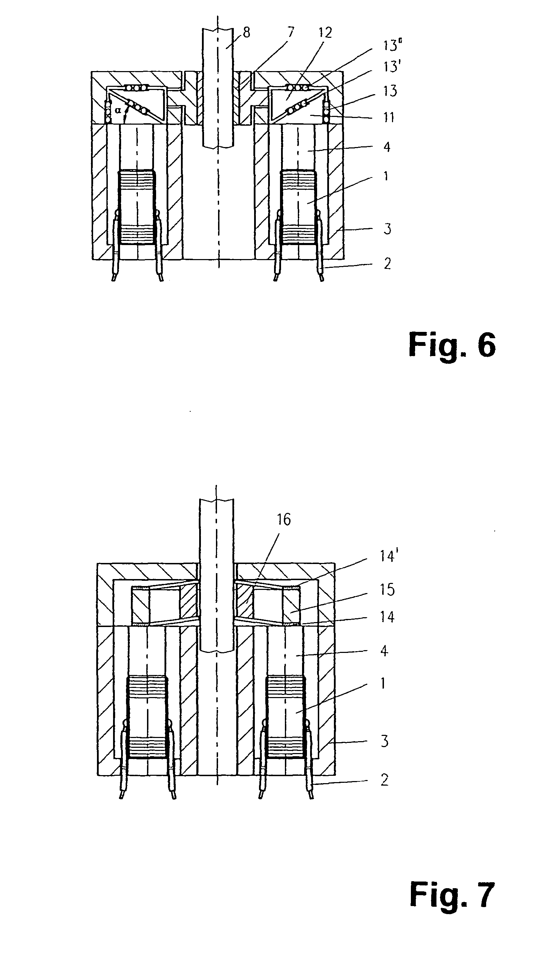

Da die Herstellung von Festkörpergelenken aufwändig ist und der Parallelogrammaufbau gemäss Fig. 1 vergleichsweise viel Bauraum benötigt ist alternativ zu diesem Übertragungsmechanismus der Vorrichtung, wie in Fig.6 dargestellt, eine Übertragung über Antriebskeile 11 und 12 möglich, die Keilwinkel α aufweisen.

Die Antriebskeile 11 und 12 sind, wie Fig. 6 gezeigt, über Rollen oder Kugeln (13, 13' und 13") bzw. über nicht dargestellte Gleitlager geführt.

Das Übersetzungsverhältnis ist:

$$Ü = 1/tg\ \alpha.$$

Für α< 45 ° ergibt sich Wegübersetzung und für α>45 Kraftübersetzung.

Ist der Antriebskeil 11 aus einem nichtsegmentierten Ring gefertigt, kann das Lager 13' entfallen.

Auf der Abtriebsseite sind mindestens zwei radialsymmetrisch angeordnete Abtriebskeile 12 mit Spannbacken 7 vorgesehen.

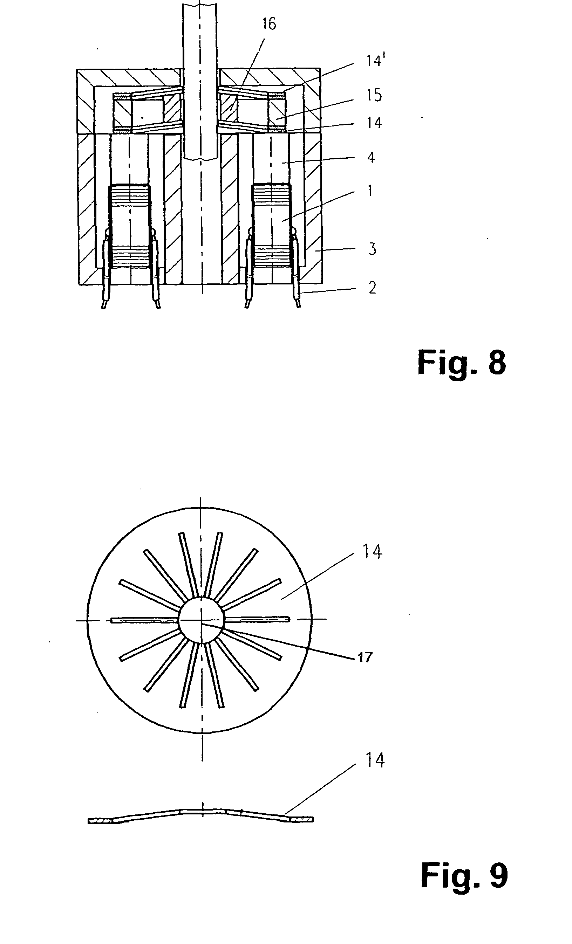

Eine weitere Variante des Übertragungsmechanismus, die sich durch Verwendung von sehr leicht herstellbaren und auswechselbaren Verschleißteilen auszeichnet, ist in den Fig. 7 und 8 dargestellt. Sie ist insbesondere für die Erzeugung großer Spannkräfte geeignet.

Das Grundelement dieses Übertragungsmechanismus bildet die in Fig. 7 gezeigte tellerförmig verformte von innen radial geschlitzten Federscheibe 14, 14' mit Ausnehmung 17.

Wie in den Fig. 8 und 9 dargestellt, ist diese Federscheibe 14, 14' bzw. sind mehrere Federscheiben 14, 14' übereinander geschichtet, ggf. durch Abstandsringe 15 und 16 getrennt, in das Gehäuse 3 eingebaut.

Dehnt der Piezostapel 1 (Fig. 8) sich aus, wird die Federscheibe 14 axial zusammengepresst und die Ausnehmung 17 verkleinert sich, so dass ein Werkzeug oder Werkstück eingespannt werden kann.

Die Übersetzung ist:

$$Ü = tg\ \alpha.$$

Typische Anstellwinkel von 15 - 30 ° ergeben Weguntersetzungen von 0,27 - 0,6 bzw. Kraftübersetzungen von 3,7 bis 1,7.

Alle in der Beschreibung, den nachfolgenden Ansprüchen und der Zeichnung dargestellten Merkmale können sowohl einzeln als auch in beliebiger Kombination miteinander erfindungswesentlich sein.

Bezugszeichenliste

| | |
|---|---|
| 1 | Piezostapel |
| 111 | Ende |
| 2 | Anschlussleitung |
| 3 | Gehäuse |
| 4 | Kompensationskörper |
| 5 | Schubstange |
| 6,6' | Schenkel |
| 7 | Spannbacke |
| 71 | Schaft |
| 8 | Spannkörper |
| 9 | Tellerfeder |
| 10 | Abtriebsplatte |
| 11, 12 | Antriebskeile |
| 13,13' | Rollen/Kugeln/Gleitlager |
| 14 | Federscheiben |
| 15,16 | Abstandsringe |
| 17 | Ausnehmung |
| α | Winkel |
| A | Antriebseinheit |
| SE | Spanneinheit |
| SP | Spannsegment |
| V | Vorrichtung |

**Patentansprüche**

**1.** Spannvorrichtung bestehend aus mindestens zwei Antriebseinheiten mit je einer Spanneinheit, **dadurch gekennzeichnet, dass** jede Antriebseinheit (A) einen Piezostapel (1) sowie einen Kompensationskörper (4) aufweist, die Antriebseinheiten (A) von einem Gehäuse (3) umgeben sind, und dass jeder Piezostapel (1) über den Kompensationskörper (4) mit der Spanneinheit (SE) verbunden ist, so dass ein Spannkörper (8) vermittels der Antriebseinheiten (A) über die Spanneinheiten (SE) einspannbar ist.

2. Spannvorrichtung nach Anspruch 1, **dadurch gekennzeichnet, dass** die Piezostapel (1) in axialer Richtung zu dem Spannkörper (8) parallel gerichtet sind.

3. Spannvorrichtung nach den Ansprüchen 1 und 2, **dadurch gekennzeichnet, dass** die Spanneinheit (SE) aus einer Schubstange (5), einem Schaft (71) und einer Spannbacke (7) besteht, wobei die Schubstange (5) mit dem Schaft (71) und dem Ende (111) des Kompensationskörpers (4) über Festkörpergelenke (51, 52) um einen Winkel ($\alpha$) verschwenkbar verbunden ist und der Schaft (71), Bestandteil des Gehäuses (3) ist.

4. Spannvorrichtung nach Anspruch 3, **dadurch gekennzeichnet, dass** der Schaft (71) und der Kompensationskörper (4) mit einem Schenkel 6 und/oder Schenkel 6', die Bestandteil des Gehäuses (3) sind, verbunden sind.

5. Spannvorrichtung nach Anspruch 1, **dadurch gekennzeichnet, dass** jeder Piezostapel (1) von dem Gehäuse (3) aus Stahl U-förmig umgeben und mit Tellerfedern (9) in diesem verspannt ist.

6. Spannvorrichtung nach den Ansprüchen 1 und 5, **dadurch gekennzeichnet, dass** jeder Kompensationskörper (4) und der dazugehörige Piezostapel (1) einerseits sowie das Gehäuse (3) andererseits hinsichtlich ihrer Länge und des Materials aufeinander abgestimmt sind, so dass ihr thermischen Ausdehnungen gleich sind.

7. Spannvorrichtung nach den Ansprüchen 1, 5 und 6, **dadurch gekennzeichnet, dass** die Piezostapel (1) kreisförmig um den Spannkörper (8) herum angeordnet sind und die Spanneinheit (SE) in Form einzelner Spannsegmente (SP) ausgebildet ist.

8. Spannvorrichtung nach den Ansprüchen 1 und 2, **dadurch gekennzeichnet, dass** die Spanneinheit (SE) aus Antriebskeilen (11/12) besteht, die über Rollen und/oder Kugeln (13/13'/13") und/oder Gleitlagern im Gehäuse (3) kraftschlüssig zwischen dem Schaft (71) der Spannbacke (7) sowie dem Kompensationsstück (4) angeordnet ist.

9. Spannvorrichtung nach den Ansprüchen 1 und 8, **dadurch gekennzeichnet, dass** Antriebskeile (11/12) einen vorgebbaren Winkel ($\alpha$) aufweisen.

10. Spannvorrichtung nach den Ansprüchen 1 und 2, **dadurch gekennzeichnet, dass** die Spanneinheit (SE) aus einer oder mehreren tellerförmig geformten Federscheibe(n) 14 mit Ausnehmungen 17 besteht, die von den Ausnehmungen 17 her radial geschlitzt sind und die im Gehäuse (3) durch den oder die Kompensationskörper (4) vorgespannt befestigt sind.

11. Spannvorrichtung nach den Ansprüchen 1 und 10, **dadurch gekennzeichnet, dass** die Federscheiben (14) übereinander geschichtet sind.

12. Spannvorrichtung nach den Ansprüchen 1 und 11, **dadurch gekennzeichnet, dass** die Federscheiben (14, 14') durch Abstandsringe 15 und 16 getrennt sind.

V

X

8
71
7
52
6'
SE
6
5
51
4
111
1
A
3
2

X

**Fig. 1**

7
9
4
1
3
2

A

**Fig. 2**

Fig. 3a

Fig. 3b

**Fig. 4a**

**Fig. 4b**

Fig. 5

Fig. 6

Fig. 7

**Fig. 8**

**Fig. 9**